# EUROPEAN PATENT SPECIFICATION

(11) **EP 2 217 425 B1**
(45) Date of publication and mention of the grant of the patent: **08.08.2018**
(21) Application number: 08853223.9
(22) Date of filing: 30.10.2008
(51) Int. Cl.: B29C 47/00

(54) **PLASTICATING SCREW FOR POLYMERIC MATERIAL**
PLASTIFIZIERSCHNECKE FÜR POLYMERMATERIAL
VIS DE PLASTIFICATION POUR MATÉRIAU POLYMÈRE

(30) Priority: 01.11.2007 US 933548
(43) Date of publication of application: 18.08.2010
(73) Proprietor: MD Plastics Incorporated, Columbiana, OH 44408 (US)
(72) Inventor: DURINA, Michael, F., Poland OH 44514 (US)
(74) Representative: FRKelly
(86) International application number: PCT/US2008/081898
(87) International publication number: WO 2009/070411

(56) References cited:
- EP-A1- 0 623 446
- WO-A1-01/36175
- WO-A1-2005/120218
- KR-A- 20070 102 789
- US-A- 3 991 153
- US-A- 4 129 386
- US-A- 4 616 989
- US-A- 4 708 623
- US-A- 5 505 239
- US-B1- 6 752 528

## Description

### BACKGROUND - FIELD OF INVENTION

This invention relates to extruders and injection machines of the type in which a screw rotatable within a barrel is employed to extrude or inject molten resinous material to the outlet port of a plasticating barrel. More particularly, this invention is concerned with thorough melting and mixing resinous material at the end of the transition and into the metering section of the plasticating screw.

### BACKGROUND - DESCRIPTION OF PRIOR ART

Plasticating equipment commonly used today are of the type which receive polymer pellets or powder, heat and work the polymer to convert it into a melted or molten state before delivering the molten polymer under pressure through a restricted outlet or discharge port. Although there are several different types of plastic polymers each having different physical properties, it is desirable that the extrudate leaving the typical plasticating equipment be fully melted, homogeneously mixed and uniform in temperature, viscosity, color and composition.

The plasticating apparatus includes an elongated cylindrical barrel, which may be heated at various locations along its axial length, and a screw, which extends longitudinally through the barrel. The screw has a core with a helical flight thereon and the flight cooperates with the cylindrical inner surface of the barrel to define a helical valley or channel for passage of the resin to the plasticating apparatus outlet port. Although the pitch of the flight can vary it is common to utilize screws of constant pitch. The pitch is the forward distance traversed in one full revolution of the flight. It is also common that screws have a pitch distance that is equal to the outside diameter of said screw. Although there are different screw configurations for different polymer compositions, the typical plasticating screw ordinarily has a plurality of sections along its extended axis with each section being designed for a particular function. Ordinarily, there is a feed section, a transition section and a metering section in series. The plasticating screw feed section extends beneath and forward from a feed opening where a polymer in pellet, powder or regrind form is introduced into the plasticating apparatus to be carried forward along the inside of the barrel. While being carried along said screw axis, the polymer is absorbing heat from said heated cylinder. The depth of said helical flight of the screw in the feed section is usually large enough to over-feed the solid polymer. The overfeeding action serves to compact and pressurize the polymer particles and form a solid bed of advancing material in the plasticating apparatus.

The material is then worked and heated in the transition section so that melting of the polymer occurs as the material is moved forward along said screw axis toward the outlet port. The polymer is passed through the transition section to reduce the root depth of the helical passageway to reflect the volume reduction due to the melting of the feed. The reduction of depth in the transition section also compresses the solid bed of pellets or powder. The transition section leads to a metering section, which has a shallow root depth helical passageway. The preferred geometry moving from the deep feed section to the shallow metering section takes the form of an involute taper geometry. The metering section has as its function the exertion of a constant flow rate pumping action on the molten polymer. In addition, any unmelted solids should be melted in the metering section as well as to mix the melted polymer homogenously. It is understood that a polymer cannot be mixed properly until it is first melted. Generally, when the metering section begins, if the change in flight depth from feed to metering is sufficient and the length of transition sufficient, the resin is at least ninety percent melted. As previously stated and as described in U.S. Pat. No. 4,752,136, the root depth of the metering section is generally shallow. This shallow depth increases the shear and friction in the polymer in addition to exposing the polymer to the heated barrel wall, which has a tendency to raise the temperature of the polymer urging the remaining solids to melt. An increase in shear rate and temperature usually has a substantial effect on the viscosity of the polymer. A change in viscosity of the material being plasticated in turn affects the flow rate of the material through the restricted outlet port. As a result, without the optimum screw configuration, there may be a failure to achieve the desired uniformity and output rate of molten polymer, which is a significant problem for the plasticating operation. What makes this task even more difficult is that the current state of the art challenges us with length to pitch and diameter ratios of 12:1 to 27:1. When there is a demand for a high output rate there is frequently not enough axial length to accomplish all that is desired and a compromise in melt quality is experienced.

The publications EP0623446 and KR20070102789 relate to plasticating apparatuses in the same field as the present application. They disclose the features of the preamble of claim 1.

It is desirous to have a metering section with a shallow flight depth so as to assure that there is a substantial shear rate and good conductive heat transfer from the heated cylinder to the polymer. The most effective melting mechanism takes place between the heated barrel and the polymer. When using the state of the art constant pitch compression screw design that is the most prominent screw in use today, a shallow meter depth can only be accomplished with a high compression ratio between said feed helical channels and said metering helical channel. The practice of increasing the compression to achieve a shallower flight depth in the metering section is proven to be counter-productive because as the taper increases the effective melting length of the screw decreases. In addition, a high compression ratio cannot be used with many polymer types because of excessive shear rates therefore this practice is limited in its scope.

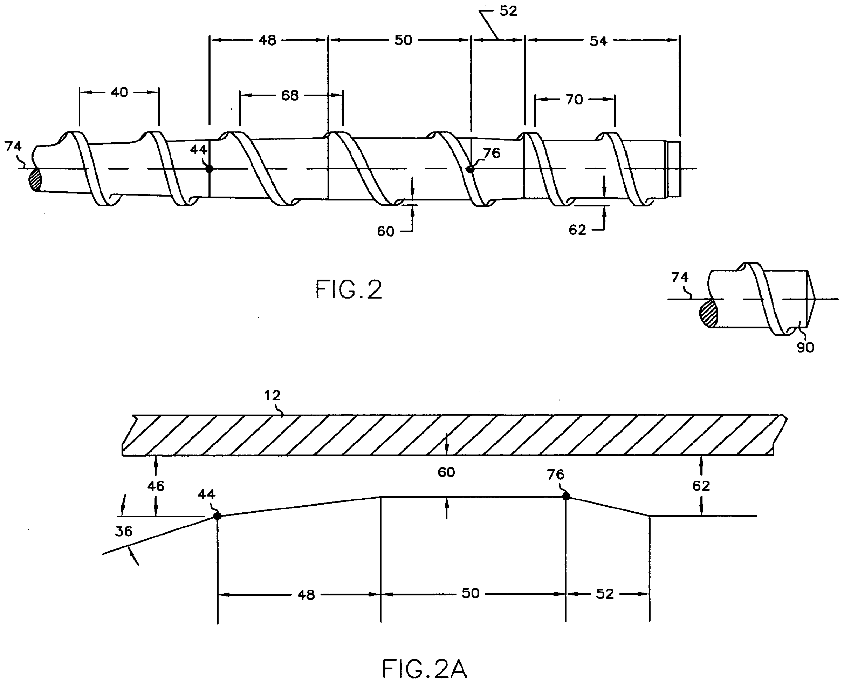

Our invention extends the melting length by utilizing a low volumetric compression ratio. By alternately increasing and decreasing the flight pitch of the screw through the metering section as seen in FIG. 2 through 4, the polymer is exposed to more barrel wall surface area delivering excellent heat transfer. The change in velocity which occurs delivers a mixing effect. In addition, by changing the root and the pitch in a stepped manner as described herein a change of pressure occurs which adds a degree of mixing as well. So, one skilled in the art would surmise that our invention has created a design that generates a more thoroughly melted and mixed polymeric material without the addition of an expensive, complicated mixing section that is typical of advanced screw designs.

Within our reference section, screw designs that have any significance in the industry have been listed. Although I do not believe that there is any prior art that is quite like the present invention with the exception of my invention US patent #6,752,528, whereas therein employs at least one substantial increase in the flight pitch with a stepped root, there are no designs that make an attempt to increase the flight pitch to achieve a shallower flight depth with alternate decreases in the flight pitch while maintaining a similar channel volume, in addition there is no relationship between the flight and the root like the present invention employs. The present invention has a substantial mixing and melting effect on the polymer with each alternating increase and decrease in the flight pitch and stepped root configuration whereas the polymer will see a substantial increased exposure to the barrel wall, melt pool velocity changes, and pressure changes.

### SUMMARY OF THE INVENTION

The present invention is directed to an apparatus according to claim 1.
1). The flight depth and pitch of the screw are used to calculate a channel volume. The screw is designed to achieve a given ratio between the channel volumes in the feed section vs. the metering section. At the end of the transition section or taper terminus, a tangent point is reached along the axis of the root that represents a flight depth. The flight depth and pitch are used to calculate a channel volume. Anywhere between the taper terminus and the discharge end of the screw, a substantial increase of the flight pitch takes place, the purpose being to achieve a similar channel volume with a shallower flight depth. Said change in the flight pitch should be at least 1.20 x (times) the pitch used through the feed and transition sections and be about between 1.20 and 1.80. An increase in the pitch or helix angle of the flight while maintaining the same channel volume has the effect to expose a greater amount of polymeric material to the barrel wall as well as to increase the relative velocity between the barrel and the resin. It is well known to those skilled in the art that the most effective melting occurs between the hot barrel and the polymeric material. The resultant shallower than normal flight channel depth has a greater ability to melt the resin completely because of a higher shear rate and more efficient conductive heat transfer even though the volumetric compression ratio remains low which assures a longer axial length of melting ability. The change in velocity has the effect to add a degree of melting and homogenous mixing to the hot resinous material.
2). In the invention, the increase in pitch occurs in conjunction with a change in the root diameter, so as the flight pitch increases, the root of the screw transitions from a deep flight depth to a shallow flight depth. The stepped change in the root that starts at the same tangent point as the increase in pitch ends about between .7 to .9 or 1.1 to 1.3 times the length of the increased flight pitch, namely upstream or downstream of the end of one complete revolution of the flight.
3). The initial substantial increase in the flight pitch is followed by a decrease in the flight pitch and a change in the root diameter that is stepped with said pitch. The decrease in the flight pitch is about between .9 to .6 x the initial increased flight pitch. The change in the root that starts at the same tangent point as the decrease in the pitch ends about between .7 to .9 or 1.1 to 1.3 times the length of the decreased flight pitch, namely upstream or downstream of the end of one complete revolution of the flight.
4). An option that executes an increase in the flight pitch followed by a decreased flight pitch followed by another increase in succession that have the same geometric stepped change in the root. The first change in the flight pitch should be preferably about between 1.20 and 1.80 x the pitch used in the feed and transition, the second change in the flight pitch is a decrease about between .9 to .6 x the initial increased pitch followed by a third changed increased flight pitch which is about between 1.20 and 1.80 x the pitch used in the feed and the transition. The changes in the root that start at the same tangent point as the increase/decrease in the flight pitch end about between .7 to .9 or 1.1 to 1.3 x the length of said pitch namely upstream or downstream of one complete revolution of the flight.
5). An option that executes an increase in the flight pitch anywhere downstream of the taper terminus, followed by alternating decreases and increases with a stepped change in the root that has been described above, the number of said changes determined by the flighted length to screw diameter ratio, and resin composite. It is understood that multiple changes in the flight and root profile while subjecting the resinous material to our substantially shallower metering flight depths are good for melting and mixing.

### BRIEF DESCRIPTION OF THE DRAWINGS

FIG. 1 shows a plasticating apparatus having a cylindrical barrel and a screw disposed within;
FIG. 1A is an enlarged screw channel cross section
FIG. 2 shows a section of a screw flight profile, end of transition through the metering section, with a single flight increase, decrease and root change;
FIG. 2A is the root profile of FIG. 2;
FIG. 3 shows a section of a screw flight profile, end of transition through the metering section, with an increase, decrease and increase flight and root change in succession;
FIG. 3A is the root profile of FIG. 3;
FIG. 4 shows a section of a screw flight profile, end of transition through the metering section, with a first flight increase downstream of the taper terminus, decrease and increase flight and root change in succession.
FIG. 4A is the root profile of FIG. 4;

### DESCRIPTION OF THE PREFFERED EMBODIMENTS

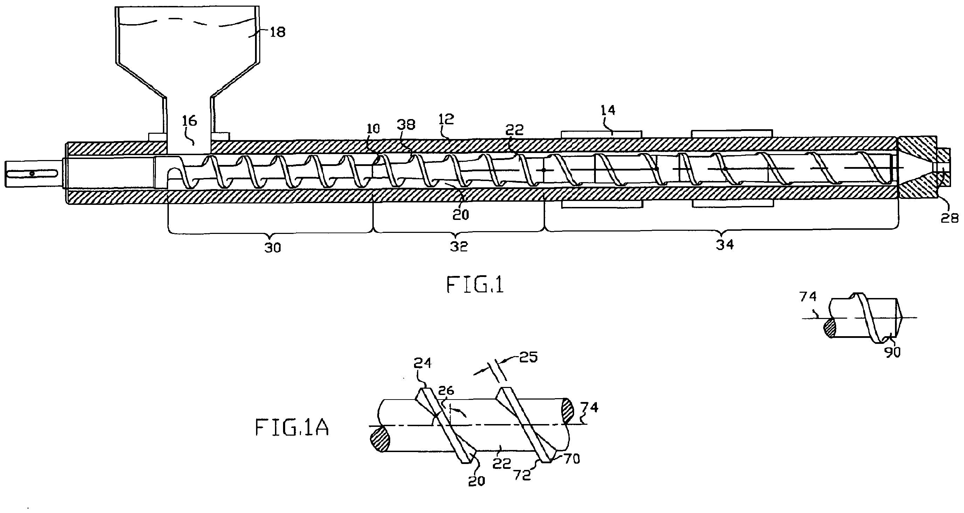

Referring to FIG. 1, a plasticating screw apparatus can be seen including a cylindrical barrel 12 having a cylindrical inner lining surface. The barrel 12 is provided with a hopper 18 filled with solid resinous material particles and an inlet port 16 for admission of one or more solid particulate resinous materials and any required additives or agents. The barrel is also provided with a discharge port 28 for the discharge of plasticated molten resinous material. Any conventional heating means 14 can be provided on the outside of the barrel 12 for applying heat energy to the barrel 12.

Referring to FIG. 1 and 1A, within the barrel 12 is a screw 10 which is rotated and sometimes reciprocated by means not shown. The screw 10 includes a single helical flight 20 winding around a core 22. The flight includes a flight land 24, which moves in close cooperative association with respect to the inner surface of the barrel 12. The axial distance between comparable points on the adjacent flights represents the pitch of the flight. The helix angle 26 that is formed by the flight in relation to the screw axis is shown in FIG. 1A.

A flight 20, a core 22, bounded by a flight 20 and the inner surface of the barrel 12 define the flight channel 38. The surface of the core 22 is referred to as the root of the screw. The screw 10 includes a relatively deep root feed section 30 for the admission, heating, working and solids conveying of the resinous material, a transition section 32 of reducing depth to adapt to the reduced volume of resin due to the elimination of air spaces between the solid particles, and a relatively shallow metering section 34 wherein the resin is predominantly in a molten state with some amount of solid particles remaining. A discharge port 28 is generally employed at the downstream end of the metering section 34. The screw 10 that can take the form of an Injection design or an Extrusion design 90.

FIG. 1A represents an enlarged view of a flight channel 38 while defining the components therein such as the helical flight 20 that is wrapped around a core 22 that forms a helix angle 26 when compared to the flight and axis 74 of the screw 10, the flight 20 being comprised of a leading edge 70 for collecting and advancing resinous material towards the discharge port 28, a trailing edge 72 that forms a boundary for said channel 38 and a flight land 24 that represents the top of the flight and the outside diameter of the screw 10, that works in close proximity with the inner wall of said barrel 12. A flight width 25 which represents the distance between the leading edge 70 and the trailing edge 72 when measured across the flight land 24.

Referring to FIG. 2 and 2A, the basic option of the invention is represented, working from the transition section 32, that tapers from a generally deep feed depth to a shallow metering depth said taper forming a angle 36, advancing along the axis 74 of the screw towards the discharge port 28, a flight pitch 40 that is generally constant with the pitch in the feed section 30, a tangent point between the transition and metering section 44 that defines the taper terminus and signals the start of a change in the flight pitch 68 that is about between 1.20 and 1.80 x (times) the original pitch 40, said tangent point 44 that also forms the starting point for a stepped change in the root 22 of the screw 10 that is not concurrent with the increased pitch. The length 48 of the stepped change in the root is generally about between .7 to .9 or 1.1 to 1.3 x the length of the increased flight pitch 68 namely upstream or downstream of one complete revolution of the flight., said change in the root generating a measurable length 48 along the axis 74 that exits at a shallow flight depth 60, shallow flight depth 60 that is constant for a length 50 terminating at a point 76 signaling a decrease in the flight pitch 70 that is about between .9 to .6 times the pitch of the increased flight pitch 68, and a change in the root from a shallow depth 60 to a deeper depth 62 that is a measurable length 52 along axis 74. A length 52 that is about between .7 to .9 or 1.1 to 1.3 x the length of the decreased flight pitch 70 namely upstream or downstream of one complete revolution of the flight. A root that terminates at a depth 62 that extends a measurable length 54 to the discharge end of the screw.

A transition section that is tapered from a deep flight depth to a shallow flight depth that forms a angle 36, a tangent point 44 between the transition section 32 and the metering section 34, that forms a measurable flight depth 46, a channel volume that is calculated using the original flight pitch 40 and flight depth 46. A design that utilizes an increased flight pitch 68 and similar channel volume that when calculated generates a substantially shallower flight metering depth 60. A flight depth 60 that is shallow for good conductive heat transfer, a flight pitch 68 that is extended for more exposure to the barrel wall and takes place in cooperation with a stepped change 48 in the root. A metering length 50 that leads to a point 76 signaling a decreased pitch 70 and change in the root that is stepped from the pitch and terminates at a distance 52 when calculated equals the same channel volume using the original flight pitch 40 and flight depth 46. A channel that extends for a distance 54 that terminates at the discharge end of the screw.

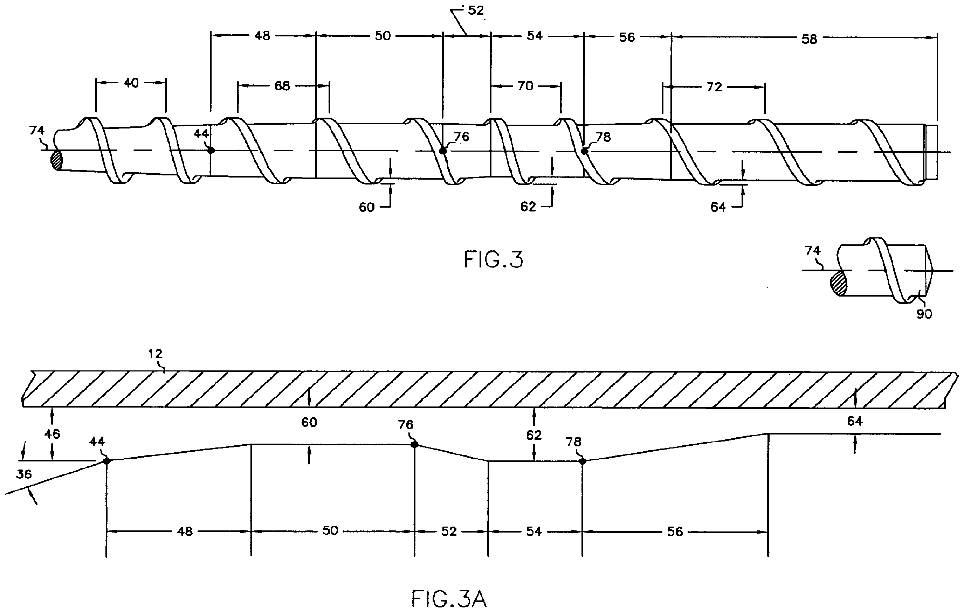

Referring to FIG. 3 and 3A, the generally preferred option of the invention is represented, working from the transition section 32, and advancing along the axis 74 of the screw towards the discharge port 28, a flight pitch 40 that is generally constant with the pitch in the feed section 30, a tangent point between the transition and metering section 44, that signals the start of a change in the flight pitch 68 that is about between 1.20 and 1.80 times the original pitch 40, said tangent point 44 that also forms the starting point for a stepped change in the root 22 of the screw 10 that is not congruent with the increased pitch 68, said change in the root that is generally about between .7 to .9 or 1.1 to 1.3 times the length of the increased flight pitch 68 generating a measurable length 48 along the axis 74 that exits at a shallow flight depth 60, shallow flight depth 60 that is constant for a distance 50 that varies depending upon the flight length to screw diameter ratio, and resin composite, a second tangent point 76 that signals a decreased change in the flight pitch 70 that is about between .9 to .6 x the initial increased pitch 68 said tangent point 76 that also forms the starting point for a stepped change in the root 22 of the screw 10 that is not concurrent with the decreased pitch 70, said change in the root that is generally about between .7 to .9 or 1.1 to 1.3 times the length of the flight pitch 70 generating a measurable length 52 along the axis 74 that exits at a flight depth 62. A depth 62 that extends a distance 54 that leads to tangent point 78. Tangent point 78 that signals an increased change in the flight pitch 72 that is about between 1.20 and 1.80 times the original flight pitch 40, said tangent point 78 that also forms the starting point for a stepped change in the root 22 of the screw 10 that is not concurrent with increased pitch 72, said change in the root that is generally about between .7 to .9 or 1.1 to 1.3 times the length of the flight pitch 72 that extends a distance 56 and exits at a flight depth 64. Flight depth 64 that is constant for the remainder of the metering section 58.

A transition section that is tapered from a deep flight depth to a shallow flight depth, a tangent point 44 between the transition section 32 and the metering section 34, that forms a measurable flight depth 46, a channel volume that is calculated using the original flight pitch 40 and flight depth 46. A design that utilizes an increase in the flight pitch 68, a decrease 70 and a increase 72 in succession, separated by constant depth flight sections 50 and 54 and stepped changes in the root 48, 52 and 56 that are not concurrent with the flight pitch, and similar channel volume that when calculated generates substantially shallower flight metering depths 60 and 64 and a depth 62 that is deeper that depths 60 and 64 but preferably shallower than or equal to depth 46. Flight depths 60 and 64 that is substantially shallower than normal and a flight pitch 68 and 72 that are substantially longer than normal and pitch 70 that is preferably about between .9 to .6 x the initial increased pitch.

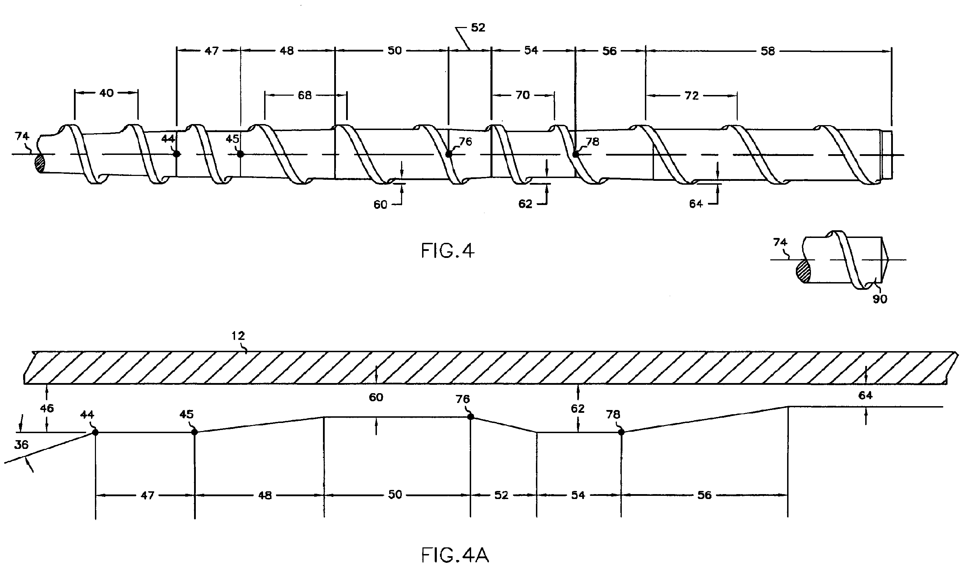

Referring to FIG. 4 and 4A, A transition section that is tapered from a deep flight depth to a shallow flight depth, a tangent point 44 between the transition section 32 and the metering section 34, that forms a measurable flight depth 46, a channel volume that is calculated using the original flight pitch 40 and flight depth 46. A design whereas the initial increased flight pitch 68 does not have to coincide with the tapered terminus 44 and can start anywhere along the axis 74 of the metering section 34, for example, at tangent point 45 which is of an axial distance 47 from taper terminus 44.

It can be seen that the first flight pitch increase can occur anywhere between the start of the metering section 32 defined by its tapered terminus 44 and its end at outlet port 28 and that there can be multiple start points of substantial flight pitch increases followed by decreases and increases in succession with a stepped change in the root the number of which is determined by the flighted length to diameter ratios and resin composite.

## Claims

1. A plasticating apparatus comprising:
- a heatable barrel (12) having inlet and outlet openings (16, 28);
- a rotating screw (10) having a root (22), a helical flight (20) disposed about the root (20) defining a helical valley, said flight being disposed within and cooperating with an inner wall of said barrel (12); said screw comprising:
- a feed section (30),
- a transition section (32) and
- a metering section (34),
- said root (22) defining a tapered terminus location (44) between the transition and metering sections, wherein an increase of flight pitch (68) takes place followed by a decrease in the flight pitch (70) in succession,
- the increase (68) and decrease (70) of the flight pitch coinciding with stepped changes (48, 52) in said root having a length along said axis which is less than or greater than the length of the flight pitch;
- a portion of said root downstream of said stepped change in said root defining a shallow flight depth in the metering section,
**characterized in that**:
- the first increase in the flight pitch is about between 1.20 and 1.80 times the pitch of the transition and feed sections (30, 32),
- the decreased flight pitch is about between 0.6 to 0.9 times said first increased flight pitch and
- the lengths of the stepped changes (48, 52) in the root that are correspondent with the increase and decrease in the flight pitch is about between 0.7 to 0.9 or 1.1 to 1.3 times the length of the preceding flight pitch.

## Patentansprüche

1. Plastifiziervorrichtung, die Folgendes umfasst:
- einen erwärmbaren Zylinder (12) mit einer Einlass- und einer Auslassöffnung (16, 28);
- eine sich drehende Schnecke (10) mit einem Kern (22), einem spiralförmigen Gang (20), der um den Kern (20) herum angeordnet ist und eine spiralförmige Kehle definiert, wobei der Gang innerhalb einer Innenwand des Zylinders (12) angeordnet ist und mit dieser zusammenwirkt, wobei die Schnecke Folgendes umfasst:
- einen Aufgabeabschnitt (30),
- einen Übergangsabschnitt (32) und
- einen Messabschnitt (34),
- wobei der Kern (22) eine verjüngte Abschlussstelle (44) zwischen dem Übergangs- und dem Messabschnitt definiert, wobei eine Zunahme der Gangteilung (68), gefolgt von einer Abnahme der Gangteilung (70) nacheinander stattfindet,
- wobei die Zunahme (68) und die Abnahme (70) der Gangteilung mit abgestuften Veränderungen (48, 52) des Kerns zusammenfallen, die eine Länge entlang der Achse aufweisen, die kleiner oder größer als die Länge der Gangteilung sind;
- wobei ein Teilabschnitt des Kerns stromabwärts der abgestuften Veränderung des Kerns eine flache Gangtiefe in dem Messabschnitt definiert,
**dadurch gekennzeichnet, dass**:
- die erste Zunahme der Gangteilung etwa zwischen dem 1,20- und 1,80-fachen der Teilung des Übergangs- und des Aufgabeabschnitts (30, 32) beträgt,
- die verringerte Gangteilung etwa zwischen dem 0,6- bis 0,9-fachen der ersten erhöhten Gangteilung ist, und
- die Längen der abgestuften Veränderungen (48, 52) des Kerns, die mit der Zunahme und Abnahme der Gangteilung übereinstimmen, etwa zwischen dem 0,7-bis 0,9- oder 1,1- bis 1,3-fachen der Länge der vorhergehenden Gangteilung betragen.

## Revendications

1. Appareil de plastification comportant :
- un cylindre chauffant (12) ayant des ouvertures d'entrée et de sortie (16, 28) ;
- une vis rotative (10) ayant une base (22), un filet hélicoïdal (20) disposé autour de la base (20) définissant un creux hélicoïdal, ledit filet étant disposé à l'intérieur d'une, et coopérant avec une, paroi intérieure dudit cylindre (12) ; ladite vis comportant :
- une section d'alimentation (30),
- une section de transition (32) et
- une section de dosage (34),
- ladite base (22) définissant un emplacement terminal conique (44) entre les sections de transition et de dosage, dans lequel une augmentation du pas de filet (68) a lieu suivie d'une réduction du pas de filet (70) successivement,
- l'augmentation (68) et la réduction (70) du pas de filet coïncidant avec des changements étagés (48, 52) dans ladite base ayant une longueur le long dudit axe qui est inférieure ou supérieure à la longueur du pas de filet ;
- une partie de ladite base en aval dudit changement étagé dans ladite base définissant une profondeur de filet peu profonde dans la section de dosage,
**caractérisé en ce que** :
- la première augmentation du pas de filet est environ entre 1,20 et 1,80 fois le pas des sections de transition et d'alimentation (30, 32),
- le pas de filet réduit est environ entre 0,6 à 0,9 fois ledit premier pas de filet augmenté et
- les longueurs des changements étagés (48, 52) dans la base qui correspondent à l'augmentation et la réduction du pas de filet est environ entre 0,7 à 0,9 ou 1,1 à 1,3 fois la longueur du pas de filet précédent.
